# EUROPÄISCHE PATENTANMELDUNG

(11) **EP 2 177 317 A1**
(43) Veröffentlichungstag der Anmeldung: **21.04.2010**
(21) Anmeldenummer: 08017946.8
(22) Anmeldetag: 14.10.2008
(51) Int. Cl.: B24C 7/00, B65G 53/26, B24C 9/00

(54) **Abrasivförderer**

(71) Anmelder: HRV Engineering GmbH, 6431 Baar (CH)
(72) Erfinder: Herger, Daniel, 6362 Stansstad (CH)
(74) Vertreter: Arato, Laszlo

(57) **Zusammenfassung**

Es wird die kontinuierliche Aufbereitung und Zuführung eines mineralischen Wasserstrahlmittels (Sand 3) vorgeschlagen, das vorzugsweise in einem flexiblen Bigbag 2 genannten Zwischenbehälter auf einer Europalette 1 der Wasserstrahlmaschine direkt zur Sandaufbereitung zugestellt, geöffnet und zur Entnahme mit einem Exhaustor 25 gekuppelten Tauchrohr 4 angestochen werden kann, wobei das Tauchrohr 4 über eine Leitung 5 und einen speicherbehalter 10 verbunden und über einen Staubfilter 23 dauernd so angesaugt wird, dass der Sand in einen Förderbehälter 14, 15 befördert und von dort alternierend zur Schneidmaschine geführt werden kann.

## Beschreibung

Die Erfindung betrifft die kontinuierliche Beschickung einer Schneiddüse mit trockenen, abrasiven Strahlmitteln, (salopp Sand), gemäss den Patentansprüchen.

Die abrasive Strahltechnologie dient dem Konturschneiden. Dazu wird Wasser mit einem Druck von 4000 bar oder mehr und einer Geschwindigkeit von 900 m/s, was etwa der dreifachen Schallgeschwindigkeit entspricht, durch eine Düse mit etwa 0,2 bis 0,4 mm Durchmesser gejagt. Mit reinem Wasserstrahl (Düsendurchmesser 0,1 mm) werden Textilien, Elastomere, Holz und Kunststoffplatten aber auch Lebensmittel aller Art bis 300 mm Materialdicke konfektioniert, also Stoffe, die weder Hitze noch Flammen ertragen. Um Platten aus härteren Stoffen, wie Metall, Glas, Stein oder Keramik bis zu 100 mm Dicke zu durchtrennen, werden dem Wasser, abrasive Partikel, (ergo Sand) von harten Mineralien (beispielsweise Granat der Firma GMA Garnet in Hamburg) zugesetzt.

In der Metallindustrie steht das abrasive Wasserstrahlschneiden mit der Lasertechnologie im Wettbewerb. Beide Verfahren sind CNC-gesteuert (Computerized Numerical Control), vollautomatisch läuft jedoch nur das Laserschneiden. Das hat zur Folge, dass der Vorteil des Wasserstrahlschneidens vom niedrigeren Investitionsbedarf durch die höheren Betriebskosten verloren geht und der Betreiber der Anlage unter wachsendem Konkurrenzdruck steht. Das Betriebsmittel des Laserschneidens ist elektrischer Strom vom Elektrizitätsnetz und die Bedienung beschränkt sich auf das Auflegen der Schneidgüter, der Entnahme der Ausschnitte und der Entfernung der Stoffresten, respektive deren Ausscheidung für das Recycling.

Die Bedienung des Wasserstrahlschneidens verlangt, nebst den analogen Handlungen für die Produktion, dauernd für die Kontinuität der Strom-, Wasser-, Sand- und Druckluftversorgung der Anlage und für die Kontrolle und Wartung der Abwasser- und der Abluftfilterung zu sorgen. Wie in der Schrift EP 0276219 steht, ist das Hauptproblem des abrasiven Wasserstrahlschneidens jedoch die Kontinuität der Sandzuführung. Denn üblicherweise wird "das Schleifmaterial ... einfach in den Behälter gegeben, wobei dieser beobachtet und mit Schleifmittel aufgefüllt werden muss, wenn der Vorrat im Behälter zur Neige geht." Zur Verbesserung schlägt die Schrift die Vermischung des Sandes mit Wasser als Trägerflüssigkeit unter niedrigem Druck und "ein Druckbehälter-Paar mit geeigneten Ventilen..." vor (vgl. Fig. 6), die abwechslungsweise mit Sand und Wasser befüllt und die Anforderung der kontinuierlichen Beschickung erfüllt, jedoch freilich wiederum nur dann funktioniert, wenn die Vorräte zur Befüllung der Behälter ausreichen.

Abhilfe sollen Silos (z.B. der Firma EFEREST in D-57234 Wilnsdorf) mit erhöhtem Fassungsvermögen schaffen, die entsprechend der obigen Schrift alternierend befüllt und unter Druck entleert werden. Weil der Handel den Massstab für die Handhabung von Sand mit 25 kg Sackverpackung setzt, ist die Bedienung der Schneidanlagen nur für kräftige Athleten geeignet. Diese Bedingung erschwert die Rekrutierung des Personals, treibt die Arbeitskosten in die Höhe und bleibt ein verstecktes Risiko für die Unfall- und Krankenversicherung der Bedienung.

Hier will die Erfindung Abhilfe anbieten, indem sie die kontinuierliche, trockene Zuführung und Aufbereitung von Sand aus tonnenschweren Massenverpackungen aus Bigbags ("grosser Sack") mit einem Saugrohr ermöglicht, mit Sensoren den Prozessablauf überwacht und so notwendig werdende Korrekturen vor dem Eintreten einer Störung veranlasst.

Die Vorteile der Erfindung sind,
- die erleichterte Handhabung der Sandzuführung,
- die Erhöhung der Sicherheit der kontinuierlichen Sandzuführung,
- die trockene Arbeitsweise (Verzicht auf die Beimischung einer Trägerflüssigkeit),
- der Preisvorteil von Sand-Massenbezug.
- Minimierung der Arbeitsrisiken des Personals,
- Reduzierung des Platzbedarfes der Schneidanlage in der Werkstatt.

Nachfolgend wird die Erfindung gemäss einem Ausführungsbeispiel dargestellt.

Die Zeichnungen zeigen:
- Fig. 1: die Skizze der kontinuierlichen Sandaufbereitung,
- Fig. 2: die Skizze des Saugrohrs.

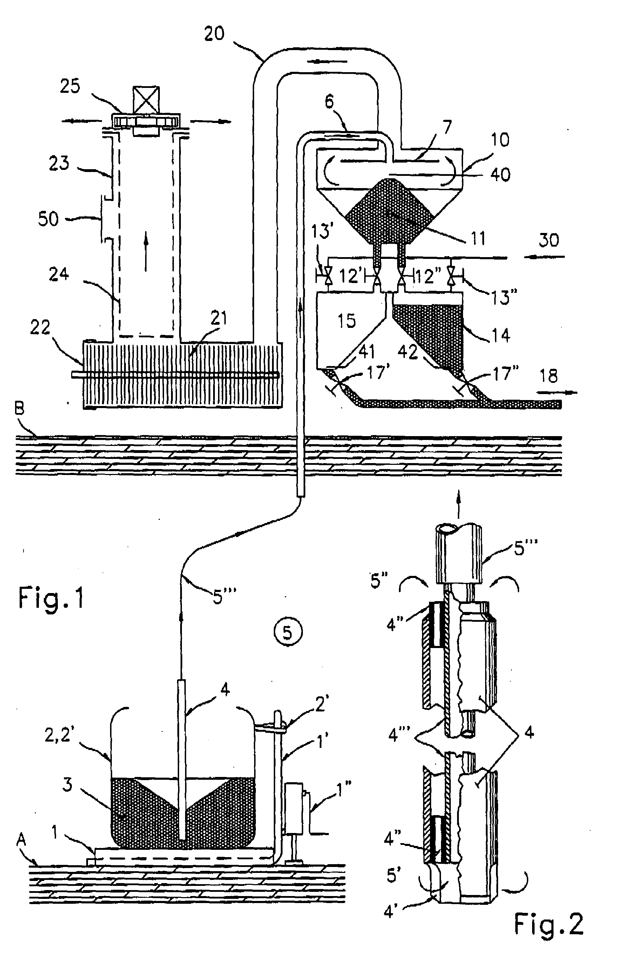

Die Figur 1 zeigt das Prinzip der kontinuierlichen Sandaufbereitung, die vorteilhafterweise auf zwei Niveaus (A, B) stattfinden kann. Das Niveau A dient der Zulieferung des Sandes 3 und kann lagermässig ausgestattet sein und braucht deshalb keine Heizung. Das Niveau B ist der Maschinenraum, wo die nicht gezeigte Schneidanlage steht und die Aufbereitung des Sandes 3 passiert. Die Zulieferung des Sandes 3 erfolgt mittels Bigbag 2, vorzugsweise mit einer standardisierten Palette 1 und ist Sache des Spediteurs. Mit anderen Worten; die Lieferung zum Gebrauchsort ist im Preis inbegriffen und weil der Lieferwagen zum Laden und Entladen der Güter mit den notwendigen Geräten wie Palettwagen, und Hydraulikbühne ausgestattet ist, gelangt der Bigbag 2 ohne Zutun des Bestellers in den Bereich des Tauchrohrs 4 und der Saugleitung 5.

Die internationale Bezeichnung des Bigbags 2 ist Flexible Intermediate Bulk Container FIBIC und er fasst 1000 - 1300 Liter Sand 3. Er wird meistens aus Polypropylen PP-Gewebe (Streckspannung 30 MPa) gefertigt (Flexibox Container GmbH, D-Würzburg), und inwendig mit Polyethylen PE-Folie beschichtet und dicht gemacht.

Das Tauchrohr 4, das in den Sand 3 der Bigbag 2 gesteckt wird, ist mit einer Saugleitung 5 mit den übrigen Teilen der Anlage, im Niveau B, oberhalb der Sandlieferung (1, 2, 3) angeordnet und mit dem Saugrohr 4''' der Saugleitungen 5 und 6 verbunden. Für die Funktion des in den Sand 3 getauchten Tauchrohrs 4 ist es unerlässlich, dass der Exhaustor 25 vor dem Eintauchen des Tauchrohrs 4 in Betrieb ist?) und im Saugrohr 4''' Unterdruck erzeugt, so dass aus der Umgebung über die beiden Verteiler 4'' um das Saugrohr 4''' (der Fig. 2) und durch das ummantelnde Tauchrohr 4 der Saugleitung 5 über die Mündungen 4' Luft strömt. Ansonsten würden die Mündungen 4', die in das überhängende Tauchrohr 4 geschnitten sind, und der Verteiler 4'' in der Nachbarschaft der Mündungen 4' mit Sand 3 gefüllt, verstopft und die Verstopfung die Erzeugung der Strömungen 5', 5'' verhindern. Für die ideale Ausbildung der Verteiler 4'' eignen sich möglichst grosse symmetrisch angeordnete Kavitäten, beispielsweise Bohrungen, so dass die Verteiler 4'' revolvertrommelähnlich ausgebildet sind.

Wenn das Tauchrohr 4 bei laufendem Exhaustor 25 in den Sand 3 taucht, wird der Sand vorerst über die Mündungen 4' des Tauchrohrs 4 in das Saugrohr 4''' befördert. Als Folge des weiteren Eintauchens muss bei der vorliegenden Ausbildung des Tauchrohrs 4 die Strömung zwischen dem Saugrohr 4''' und dem Tauchrohr 4 verlagert werden, so dass die Zuluft 5" über die beiden Verteiler 4'' zum Saugrohr 4''' strömt und beim Eintritt in das Saugrohr 4''' den bestreiften Sand 3 mitreisst. Das Luft-Sandgemisch steigt über die Saugleitung 5, die teilweise flexibel ist, wie die Fig. 1 verdeutlicht, durch die Leitung 6 in den Speicherbehälter 10 der vorzugsweise ein Zylinder mit einem konischen Boden ist und zur Aufnahme des geförderten Sandes 11 dient. Der Eintritt des Luft-Sandgemisches in den Speicher 10 erfolgt durch die Schikane 7, die vorteilhafterweise eine runde Platte und gross genug ist, um die Luft zu wenden und somit ihre Strömungsgeschwindigkeit drastisch zu reduzieren. Da der Sand mit bis zu 4 % Staub belastet ist, muss die Abluft vor dem Verlassen der Anlage gereinigt werden. Aus diesem Grunde passiert sie mit <1m/s den Staubabscheider 21, der beispielsweise mit einer ausziehbaren Spiralbürste 22 ausgerüstet ist, sowie den Filter 23, der einen foliebesetzbaren Korb 24 enthält und den Exhaustor 25 trägt. Zur Indikation des Filterwechsels wird die Lesbarkeit eines Textes an der Filterfolie über dem Schauglas 50 vorgeschlagen.

Die Fig. 1 zeigt den fast gefüllten Speicherbehälter 10, den soeben geleerten Förderbehälter 15 und den gefüllten Förderbehälter 14 im Moment des Rollenwechsels. Dieser Zustand wird erreicht, wenn auf dem Sensor 41 (ein Näherungsschalter) des Förderbehälters 15 kein Sand mehr lastet und somit geleert ist. Im selben Augenblick müssen die Ventile der Sandförderung 17' und der Druckluft (30) 13' des leeren Förderbehälter 15 geschlossen und der mit Sand gefüllte Förderbehälter 14 durch die Öffnung des Ventils 17'' für die Sandförderung 18 freigegeben und mit der Öffnung des Druckluftventils 13'' das Auspressen des Sandes begonnen werden. Sobald im Lagerbehälter 10 der Sandhaufen 11 den Sensor 40 und somit das Füllvolumen der Förderbehälter 14, 15 erreicht, wird das Sand-Ventil 12' betätigt und der Förderbehälter 15 gefüllt.

Statistisch, dass heisst mit dem Aufaddieren der Füllzyklen des Speicherbehälters 10, (= Anzahl der Meldungen des Sensors 40), lässt sich die etwaige Leerung des Bigbags 2 überwachen. Nützlicher ist jedoch die Limitierung der Füllzeitdauer, denn damit sind alle möglichen Störungen des Systems erfassbar. So ist, wenn bei einer Zykluszeit von 20 Minuten nach 30 Minuten keine Meldung vom Sensor 40 kommt, der Operator optisch und akustisch mit Nachdruck zu warnen.

Wenn nach der etwa 80%-igen Leerung des Bigbags 2 diese Warnung folgt, wird der Operator die Lasche(n) 2' um die Kippvorrichtung 1' der Palette 1 legen und durch das Drehen der Stockwinde 1'' etwa 40 - 45° kippen, so dass der Sand des Bigbags 2 restlos entnommen werden kann.

## Patentansprüche

1. Apparat zur Aufbereitung, Zuführung und Dosierung von abrasiven Strahlmitteln (Sand 3) insbesondere zu einer Strahldüse, **dadurch gekennzeichnet, dass** der Apparat aus einem Tauchrohr (4) Leitungen (5''',6, 20), einem Speicherbehälter (10), zwei Förderbehältern (14, 15) sowie Leitungen, (Ventile 12', 12'', 13', 13'', 17',17''), Staubabscheider 21, Filter 23 und einem Exhaustor 25 besteht und mit einem Tauchrohr (4) Sand (3) aus einem flexiblen Zwischenbehälter (2) und Luft (5) aus der Umgebung ansaugt, vermischt und über die Saugleitung (5''' ,6) zum Speicherbehälter (10) fördert, wo sich der Sand wegen der radikalen Ausdehnung des Strömungsvolumens setzt und den Sandhaufen (11) bildet, so dass vom Sandhaufen (11) des Speicherbehälters (10), je nach Öffnung der Ventile (12', 12''), der Förderbehälter (14) oder der Förderbehälter (15) abwechselnd gefüllt wird, wobei die Auslassventile (17', 17'') jeweils gesperrt sind und der Füllstand der Sammelbehälter (10) und die Füllstände der Förderbehälter (14, 15) von den Sensoren (40, 41, 42) erfasst und das Füllen der Förderbehälter (14, 15) so gesteuert wird, dass sich die Förderbehälter (14, 15) durch die Schwerkraft mit Sand füllen und der Sand abwechselnd über die Ventile (13', 13") durch die Druckluft (30) über die Ventile (17', 17") stetig in die Leitung der Sandförderung gepresst wird.

2. Tauchrohr (4) zum Dosierapparat nach Anspruch 1 **dadurch gekennzeichnet, dass** das Ende des Tauchrohrs (4) offen und mit torbogenförmigen Mündungen (4') versehen ist, und an deren Öffnung wie am anderen Ende des Tauchrohrs (4) jeweils ein Verteiler 4'' grenzt und das Saugrohr (4''') im Tauchrohr (4) vorteilhafterweise koaxial angeordnet ist und die Verteiler (4'') vorteilhafterweise achsparallele Bohrungen in der Art des Trommelrevolvers aufweisen.

3. Zwischenbehälter (2) zum Dosierapparat nach Anspruch 1 **dadurch gekennzeichnet, dass** dieser aus hochfestem synthetischem Gewebe wie Polypropylen und mit einer gleitenden, dichtenden Schicht gefertigt ist, beispielsweise aus Polyethylen in der Art des Bigbags, und die Mündung des Behälters (2) mit Traglaschen (2') bestückt ist und mit Sand (3) gefüllt auf einer Palette (1) transportiert und mit einer Kippvorrichtung (1') versehen wird, an der die Lasche (2'') angehängt und durch das Drehen der Stockwinde 1" um etwa 40 - 45° die Palette (1) so gekippt wird, dass der Sand des Bigbags 2 restlos entnommen werden kann.

4. Speicherbehälter (10) zum Dosierapparat nach Anspruch 1 **dadurch gekennzeichnet, dass** der Behälter mit dem Abluftrohr (20) der Saugleitung (6) und den Förderbehältern (14, 15) verbunden, im oberen Teil zylindrisch und im unteren Bereich konisch ist und vor der Öffnung des Ablaufrohrs (20) und um die Eintrittsöffnung der Saugleitung (6) eine Schikane (7) aufweist.

5. Staubabscheider (21) zum Dosierapparat nach Anspruch 1 **dadurch gekennzeichnet, dass** er mit dem Abluftrohr (20) und dem Filter (23) verbunden und vorteilhafterweise mit einer ausziehbaren Borstenstruktur, in Form einer Spiralbürste, ausgerüstet ist.

6. Filter (23) zum Dosierapparat nach Anspruch 1, **dadurch gekennzeichnet, dass** er den Exhaustor (25) trägt und mit einem ausnehmbaren Korb (24) ausgerüstet ist, und der Korb vorzugsweise mit Filterfolie belegt wird, die vorzugsweise mit Text bedruckt ist, um die Verschmutzung der Filterfolie durch die schwindende Lesbarkeit wahrzunehmen.

## Geänderte Patentansprüche

### Geänderte Patentansprüche gemäss Regel 137(2) EPÜ.

**1.** Apparat zur Aufbereitung, Zuführung und Dosierung von abrasiven Strahlmitteln (Sand 3) insbesondere zu einer Strahldüse, **dadurch gekennzeichnet, dass** der Apparat aus einem Tauchrohr (4) Leitungen (5"',6, 20), einem Speicherbehälter (10), zwei Förderbehältern (14, 15) sowie Ventile (12', 12" , 13' , 13", 17', 17"), Staubabscheider 22, Filter 23 und einem Exhaustor 25 besteht und mit einem Tauchrohr (4) Sand (3) aus einem flexiblen Zwischenbehälter (2) und Luft (5) aus der Umgebung ansaugt, vermischt und über die Saugleitung (5"',6) zum Speicherbehälter (10) fördert, wo sich der Sand wegen der radikalen Ausdehnung des Strömungsvolumens setzt und den Sandhaufen (11) bildet, so dass vom Sandhaufen (11) des Speicherbehälters (10), je nach Öffnung der Ventile (12', 12"), der Förderbehälter (14) oder der Förderbehälter (15) abwechselnd gefüllt wird, wobei die Auslassventile (17', 17") jeweils gesperrt sind und der Füllstand der Sammelbehälter (10) und die Füllstände der Förderbehälter (14, 15) von den Sensoren (40, 41, 42) erfasst und das Füllen der Förderbehälter (14, 15) so gesteuert wird, dass sich die Förderbehälter (14, 15) durch die Schwerkraft mit Sand füllen und der Sand abwechselnd über die Ventile (13', 13") durch die Druckluft (30) über die Ventile (17', 17") stetig in die Leitung der Sandförderung gepresst wird.

**2.** Apparat nach Anspruch 1 **dadurch gekennzeichnet, dass** der Apparat ein Tauchrohr (4) aufweist und das Ende des Tauchrohrs (4) offen und mit torbogenförmigen Mündungen (4') versehen ist, und an deren Öffnung wie am anderen Ende des Tauchrohrs (4) jeweils ein Verteiler 4" grenzt und das Saugrohr (4"') im Tauchrohr (4) vorteilhafterweise koaxial angeordnet ist und die Verteiler (4") vorteilhafterweise achsparallele Bohrungen in der Art des Trommelrevolvers aufweisen.

**3.** Apparat nach Anspruch 1 **dadurch gekennzeichnet, dass** der Apparat Zwischenbehälter (2) aufweist und der Zwischenbehälter (2) aus hochfestem synthetischem Gewebe wie Polypropylen und mit einer gleitenden, dichtenden Schicht gefertigt ist, beispielsweise aus Polyethylen in der Art des Bigbags, und die Mündung des Behälters (2) mit Traglaschen (2') bestückt ist und mit Sand (3) gefüllt auf einer Palette (1) transportiert und mit einer Kippvorrichtung (1') versehen wird, an der die Traglasche (2') angehängt und durch das Drehen der Stockwinde 1" um etwa 40 - 45° die Palette (1) so gekippt wird, dass der Sand des Bigbags 2 restlos entnommen werden kann.

**4.** Apparat nach Anspruch 1 **dadurch gekennzeichnet, dass** der Apparat ein Speicherbehälter (10) aufweist, und dass der Speicherbehälter mit dem Abluftrohr (20) der Saugleitung (6) und den Förderbehältern (14, 15) verbunden und im oberen Teil zylindrisch und im unteren Bereich konisch ist und vor der Öffnung des Ablaufrohrs (20) und um die Eintrittsöffnung der Saugleitung (6) eine Schikane (7) aufweist.

**5.** Apparat nach Anspruch 1 **dadurch gekennzeichnet, dass** der Staubabscheider (22) mit dem Abluftrohr (20) und dem Filter (23) verbunden und vorteilhafterweise mit einer ausziehbaren Borstenstruktur, in Form einer Spiralbürste (21), ausgerüstet ist.

**6.** Apparat nach Anspruch 1 **dadurch gekennzeichnet, dass** der Filter (23) ein Exhaustor (25) trägt und mit einem ausnehmbaren Korb (24) ausgerüstet ist, und der Korb (24) vorzugsweise mit Filterfolie belegt wird, die vorzugsweise mit Text bedruckt ist, um die Verschmutzung der Filterfolie wegen die schwindende Lesbarkeit durch das Fenster 50 wahrzunehmen.
